# EUROPÄISCHE PATENTANMELDUNG

(11) **EP 4 033 656 A1**
(43) Veröffentlichungstag der Anmeldung: **27.07.2022**
(21) Anmeldenummer: 22151079.5
(22) Anmeldetag: 12.01.2022
(51) Int. Cl.: H02P 6/182, H02P 6/21, H02P 6/34

(54) **VERFAHREN ZUM ANSTEUERN EINES MINDESTENS ZWEIPHASIGEN BÜRSTENLOSEN MOTORS**

(30) Priorität: 26.01.2021 BE 202105056
(71) Anmelder: Miele & Cie. KG, 33332 Gütersloh (DE)
(72) Erfinder: Sammoud, Hafedh, 8090 Kelibia (TN)

(57) **Zusammenfassung**

Verfahren zum Ansteuern eines mindestens zweiphasigen bürstenlosen Motors

Die Erfindung betrifft ein Verfahren zum Ansteuern eines mindestens zweiphasigen bürstenlosen Motors (M), vorzugsweise ohne Rotorlagesensor, mit wenigstens den Schritten:
• Bestromen (100) des bürstenlosen Motors (M), wobei die Spannung (U_{Phase}) des Bestromens (100) vorzugsweise mittels PWM-Steuerung eingestellt wird,
• Betreiben (200) des bürstenlosen Motors (M) mit rotierendem Rotor,
• während der Rotation des Rotors, Beenden (300) des Bestromens (100) für wenigstens eine elektrische Periode, vorzugsweise für mehrere elektrische Perioden,
• während der stromlosen Rotation des Rotors, Erfassen (400) der induzierten Spannung (EMK),
• Bestimmen (500) der Lage und der Frequenz des Rotors basierend auf der erfassten induzierten Spannung (EMK), und
• Betreiben (600) des bürstenlosen Motors (M) im geregelten Betrieb basierend auf der bestimmten Lage und Frequenz des Rotors.

## Beschreibung

Die Erfindung betrifft ein Verfahren zum Ansteuern eines mindestens zweiphasigen bürstenlosen Motors gemäß dem Patentanspruch 1, eine Ansteuerungsvorrichtung zum Ansteuern eines mindestens zweiphasigen bürstenlosen Motors gemäß dem Patentanspruch 7, einen mindestens zweiphasigen bürstenlosen Motor mit einer derartigen Ansteuerungsvorrichtung gemäß dem Patentanspruch 8 sowie ein Haushaltsgerät mit mindestens einem derartigen mindestens zweiphasigen bürstenlosen Motor gemäß dem Patentanspruch 9.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: Brushless direct current motor - kurz: BLDC motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotential des künstlichen Sternpunkts wird dann anschließend mit dem Spannungspotential der inaktiven Phase, zum Beispiel über einen Komparator, verglichen. Der Nulldurchgang dieser Differenz wird als Referenzzeitpunkt für die Kommutierung genommen.

Zum Starten eines derartigen bürstenlosen Motors aus dem Stillstand heraus wird der bürstenlose Motor über den geregelten Frequenzumrichter zunächst gesteuert angetrieben und sozusagen "blind", d. h. ohne Regelung, auf eine gewisse Drehzahl gebracht. Dies wird auch als "open loop operation" bezeichnet. Dies ist dadurch begründet, dass der Rotorlagesensor bzw. andere Systeme zur Rotorlagebestimmung eine Mindestdrehzahl des Rotors des bürstenlosen Motors benötigen, ab welcher die Signale zur Regelung eine ausreichende Qualität aufweisen. Ist diese Mindestdrehzahl erreicht, so wird in den geregelten Betrieb umgeschaltet, welcher auch als "closed loop operation" bezeichnet wird. Jetzt wird der bürstenlose Motor nicht mehr angesteuert, sondern mit Hilfe der Rotorlagebestimmung geregelt betrieben.

Bei den bekannten Verfahren zum Ansteuern bürstenloser Motoren wird der bürstenlose Motor über eine sogenannten U/f-Phase bis zu einer bestimmten Drehzahl hochgefahren. Parallel werden die elektrischen Signale zur Rotorlagebestimmung aufgenommen. Ist eine ausreichende Signalqualität erreicht, wird in den geregelten Betrieb umgeschaltet.

Es sind auch andere Verfahren zum Ansteuern bürstenloser Motoren bekannt, bei denen der bürstenlose Motor bis zu einer fest voreingestellten Drehzahl gesteuert hochgefahren und dann in den geregelten Betrieb umgeschaltet wird. Auch hier werden die Signale parallel zum ungeregelten Hochfahren des bürstenlosen Motors erfasst bzw. bestimmt. Die interne Rechneransteuerung des geregelten Frequenzumrichters wird auf den Rotorlagewinkel aufsynchronisiert und dann wird "hart" auf die Regelung umgeschaltet.

Beim Umschalten aus dem ungeregelten Betrieb in den geregelten Betrieb kann es zu Stromschwankungen kommen. Bei einem schwergängigen bürstenlosen Motor kann dies zu einem Abbruch des Hochlaufes führen. Dies gilt auch für einen gealterten bürstenlosen Motor. Des Weiteren muss der Umschaltpunkt üblicherweise auf den bürstenlosen Motor eingestellt werden, da Schwankungen bei der Herstellung und Montage der Bauteile des bürstenlosen Motors in der Serienherstellung oder auch andere Motorparameterschwankungen zu einem unsicheren Hochlauf führen können.

Ein derartiger Hochlauf eines bürstenlosen Motors kann auch auftreten, wenn ein Benutzer das entsprechende Gerät nach einem Betrieb ausgeschaltet hat und nach relativ kurzer Zeit wieder einschaltet, so dass der Motor beim erneuten Einschalten noch nicht zum Stillstand gekommen ist, sondern sich noch dreht. Wenn ein bürstenloser Motor ausgeschaltet wird, so trudelt dessen Rotor nämlich in der Regel mehr oder weniger langsam aus.

Bei bürstenlosen Motoren, die eine schwergängige Last antreiben, kommt der Rotor nach dem Abschalten sehr schnell zum Stillstand, so dass das erneute Anfahren bzw. Hochlaufen aus dem Stillstand heraus analog zu einem "Kaltstart" wie zuvor beschrieben erfolgen kann. Bei bürstenlosen Motoren jedoch, die wenig Last antreiben wie zum Beispiel ein Lüftermotor, kann es sehr lange dauern, bis der Rotor zum Stillstand kommt. Wenn zum Beispiel bei einem Lüfter der bürstenlose Motor während dem Austrudeln des Rotors wieder eingeschaltet werden soll, so wird in der Regel entweder gewartet, bis der Rotor steht, was jedoch das Anfahren zeitlich verzögert, oder der Rotor wird zusätzlich abgebremst, bis der Rotor steht, was jedoch einen zusätzlichen Aufwand darstellt und weiterhin zu einem zeitlichen Verzug führt. In jedem Fall kann der bürstenlose Motor erst aus dem Stillstand wieder definiert hochgefahren werden.

Der Erfindung stellt sich das Problem, ein Verfahren zum Ansteuern eines mindestens zweiphasigen bürstenlosen Motors der eingangs beschriebenen Art bereitzustellen, um das Umschalten aus dem ungeregelten Betrieb in den geregelten Betrieb zu verbessern. Zusätzlich oder alternativ soll ein Verfahren zum Ansteuern eines mindestens zweiphasigen bürstenlosen Motors der eingangs beschriebenen Art bereitgestellt werden, um einen bürstenlosen Motor direkt aus einer auslaufenden Bewegung wieder hochzufahren, ohne den Rotor vorher in den Stillstand bringen zu müssen. Dies soll insbesondere möglichst einfach, kostengünstig und bzw. oder flexibel umgesetzt werden können. Zumindest soll eine Alternative zu bekannten derartigen Verfahren geschaffen werden.

Erfindungsgemäß wird dieses Problem durch ein Verfahren mit den Merkmalen des Patentanspruchs 1, durch eine Ansteuerungsvorrichtung mit den Merkmalen des Patentanspruchs 7, durch einen mindestens zweiphasigen bürstenlosen Motor mit den Merkmalen des

Patentanspruchs 8 sowie durch ein Haushaltsgerät mit den Merkmalen des Patentanspruchs 9 gelöst. Vorteilhafte Ausgestaltungen und Weiterbildungen der Erfindung ergeben sich aus den nachfolgenden Unteransprüchen.

Somit betrifft die Erfindung ein Verfahren zum Ansteuern eines mindestens zweiphasigen bürstenlosen Motors, vorzugsweise ohne Rotorlagesensor, mit wenigstens den Schritten:
- Bestromen von zwei Phasen, wobei die Spannung des Bestromens vorzugsweise mittels PWM-Steuerung eingestellt wird,
- Betreiben des bürstenlosen Motors mit rotierendem Rotor,
- während der Rotation des Rotors, Beenden des Bestromens für wenigstens eine elektrische Periode, vorzugsweise für mehrere elektrische Perioden,
- während der stromlosen Rotation des Rotors, Erfassen der induzierten Spannung,
- Bestimmen der Lage und der Frequenz des Rotors basierend auf der erfassten induzierten Spannung und
- Betreiben des bürstenlosen Motors im geregelten Betrieb basierend auf der bestimmten Lage und Frequenz des Rotors.

Somit kann erfindungsgemäß ein Bestromen des bürstenlosen Motors erfolgen, um dessen Rotor aus dem Stillstand in Bewegung zu versetzen, was als Anlauf oder Hochfahren des bürstenlosen Motors bezeichnet werden kann. Wird der Rotor rotierend betrieben, was üblicherweise gesteuert erfolgt, so kann in diesem Zustand das Bestromen beendet werden. Während der Rotor sich weiterhin dreht, jedoch hierbei kaum langsamer wird, kann die induzierte Spannung wenigstens einer Phase und vorzugsweise aller Phasen erfasst und hieraus sowohl die Frequenz der aktuellen Rotation des Rotors als auch die Lage des Rotors relativ zum Stator bzw. zu den Spulen des Stators bestimmt werden, wie weiter unten beispielhaft näher beschrieben werden wird. Sind die aktuelle Lage und die aktuelle Frequenz des Rotors mit ausreichender Genauigkeit bestimmt, so kann in den geregelten Betrieb des bürstenlosen Motors übergangen werden.

Der vorliegenden Erfindung liegt dabei die Erkenntnis zugrunde, dass bisher ein direktes bzw. "hartes" Umschalten aus dem gesteuerten Hochlauf in den geregelten Betrieb problematisch sein kann, weil die aktuelle Lage und die aktuelle Frequenz des Rotors zum willkürlich gewählten Zeitpunkt des Umschaltens nicht bekannt sind. Liegt der Zeitpunkt des Umschaltens sehr ungünstig, so kann das Hochfahren sogar nicht erfolgreich sein.

Erfindungsgemäß wird daher zwischen der Phase des gesteuerten Hochlaufs und der Phase des geregelten Betriebs eine weitere Phase als Messphase dazwischengeschoben, in welcher die aktuelle Lage und die aktuelle Frequenz des Rotors bestimmt werden. Erst dann, wenn die aktuelle Lage und die aktuelle Frequenz des Rotors bekannt sind, wird in den geregelten Betrieb umgeschaltet. Dies erfolgt unter Berücksichtigung der aktuellen Lage und der aktuellen Frequenz des Rotors derartig, dass das weitere geregelte Betreiben passend zur aktuellen Lage und zur aktuellen Frequenz des Rotors einsetzt und dann fortgeführt wird. Auf diese Art und Weise kann der Umschaltpunkt passend zur vorliegenden Rotation des Rotors erfolgen, wodurch ein sicheres Hochlaufen erreicht werden kann.

Ein derartiges Bestromen des bürstenlosen Motors kann auch als bereits geregelter Betrieb erfolgen, welcher zum Beispiel von einem Benutzer beendet wird, so dass der Rotor dann mangels weiterer Bestromung zunehmend langsamer werdend weiterdreht. Soll in diesem Zustand der geregelte Betrieb wiederaufgenommen werden, so können auch in diesem Fall wie zuvor beschrieben die aktuelle Lage und die aktuelle Frequenz des Rotors bestimmt und bei ausreichender Genauigkeit wieder in den geregelten Betrieb des bürstenlosen Motors übergangen werden. In diesem Fall wird der Zeitraum des langsamer werdenden Rotors als Messphase wie zuvor beschrieben genutzt. Hierdurch kann der Umschaltpunkt auch dann passend zur vorliegenden Rotation des Rotors gewählt werden, falls wieder zu einem geregelten Betrieb zurückgekehrt werden soll.

Gemäß einem Aspekt der Erfindung erfolgt das Betreiben des bürstenlosen Motors im geregelten Betrieb basierend auf der bestimmten Lage und Frequenz des Rotors durch die Schritte:
- Modellieren des bürstenlosen Motors basierend auf der bestimmten Lage und Frequenz des Rotors,
- Synchronisieren des bürstenlosen Motors auf das Modell des bürstenlosen Motors und
- bei erfolgter Synchronisation des bürstenlosen Motors auf das Modell des bürstenlosen Motors, Bestromen von zwei Phasen durch den Umrichter.

Mit anderen Worten wird zum Beispiel softwarebasiert im Umrichter bzw. in dessen Steuerungseinheit bzw. Ansteuerungsvorrichtung ein Modell des bürstenlosen Motors nachgebildet und dieses Modell mit der bestimmten aktuellen Lage und Frequenz des Rotors gespeist, so dass eine Simulation der aktuellen Rotationsbewegung des Rotors des bürstenlosen Motors seitens des Umrichters durchgeführt werden kann. Dann wird der Betrieb des Umrichters mit der Rotationsbewegung des Rotors des simulierten bürstenlosen Motors synchronisiert, ohne dass hierbei bereits eine Bestromung des realen bürstenlosen Motors erfolgt. Erst wenn Modell und Realität eine ausreichende Übereinstimmung aufweisen, um einen sicheren Übergang in den geregelten Betrieb zu gewährleisten, erfolgt das Umschalten und die am Modell simulierte Bestromung wird vom Umrichter auf den realen bürstenlosen Motor angewendet.

Gemäß einem weiteren Aspekt der Erfindung erfolgt das Bestimmen der Lage des Rotors basierend auf der erfassten induzierten Spannung durch die Schritte:
- Ermitteln der Nulldurchgänge der induzierten Spannung und
- Bestimmen der Lage des Rotors durch die Zeitpunkte der Nulldurchgänge der induzierten Spannung.

Hierdurch kann die aktuelle Lage des Rotors bestimmt werden, um diese Information wie zuvor beschrieben verwenden zu können.

Gemäß einem weiteren Aspekt der Erfindung erfolgt das Bestimmen der Frequenz des Rotors basierend auf der erfassten induzierten Spannung durch die Schritte:
- Ermitteln der Nulldurchgänge der induzierten Spannung und
- Bestimmen der Frequenz des Rotors durch die zeitlichen Abstände der Nulldurchgänge der induzierten Spannung.

Hierdurch kann die aktuelle Frequenz des Rotors bestimmt werden, um diese Information wie zuvor beschrieben verwenden zu können.

Gemäß einem weiteren Aspekt der Erfindung erfolgt das Bestromen von zwei Phasen als gesteuerter Hochlauf. Hierdurch kann das erfindungsgemäße Verfahren auf den gesteuerten Hochlauf eines bürstenlosen Motors angewendet werden, wie zuvor bereits beschrieben.

Gemäß einem weiteren Aspekt der Erfindung erfolgt das Bestromen von zwei Phasen als geregelter Betrieb. Hierdurch kann das erfindungsgemäße Verfahren auf den geregelten Betrieb eines bürstenlosen Motors angewendet werden, wie zuvor bereits beschrieben.

Die Erfindung betrifft auch eine Ansteuerungsvorrichtung zum Ansteuern eines mindestens zweiphasigen bürstenlosen Motors, vorzugsweise ohne Rotorlagesensor, vorzugsweise gemäß eines Verfahrens wie zuvor beschrieben, mit einer Steuerungseinheit, welche ausgebildet ist, zwei Phasen des mindestens zweiphasigen bürstenlosen Motors zu bestromen, wobei die Spannung des Bestromens vorzugsweise mittels PWM-Steuerung eingestellt wird, und mit einer Abtasteinrichtung, welche ausgebildet ist, die induzierte Spannung zu erfassen, wobei die Steuerungseinheit ferner ausgebildet ist, den bürstenlosen Motor mit rotierendem Rotor zu betreiben, während der Rotation des Rotors das Bestromen für wenigstens eine elektrische Periode, vorzugsweise für mehrere elektrische Perioden, zu beenden, die Lage und die Frequenz des Rotors basierend auf der erfassten induzierten Spannung zu bestimmen und den bürstenlosen Motor im geregelten Betrieb basierend auf der bestimmten Lage und Frequenz des Rotors zu betreiben. Hierdurch kann eine Ansteuerungsvorrichtung bereitgestellt werden, um die zuvor beschriebenen Aspekte der Erfindung bzw. um das erfindungsgemäße zuvor beschriebene Verfahren bei einem mindestens zweiphasigen bürstenlosen Motor umzusetzen.

Die vorliegende Erfindung betrifft auch einen mindestens zweiphasigen bürstenlosen Motor, vorzugsweise ohne Rotorlagesensor, mit einer Ansteuerungsvorrichtung wie zuvor beschrieben. Hierdurch kann ein mindestens dreiphasiger bürstenloser Motor bereitgestellt werden, um die zuvor beschriebenen Aspekte der Erfindung bzw. um das erfindungsgemäße zuvor beschriebene Verfahren umzusetzen.

Die vorliegende Erfindung betrifft auch ein Haushaltsgerät mit mindestens einem mindestens zweiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Gemäß einem Aspekt der Erfindung weist das Haushaltsgerät einen, vorzugsweise wiederaufladbaren, elektrischen Energiespeicher auf und ist ausgebildet, mittels der gespeicherten elektrischen Energie des elektrischen Energiespeichers betrieben zu werden. Hierdurch können die zuvor beschriebenen Eigenschaften und Vorteile insbesondere auf ein akkubetriebenes Haushaltsgerät angewendet und mit dessen Eigenschaften und Vorteilen kombiniert werden.

Ein Ausführungsbeispiel der Erfindung ist in den Zeichnungen rein schematisch dargestellt und wird nachfolgend näher beschrieben. Es zeigt
- Figur 1: Schaltung eines bekannten bürstenlosen Motors;
- Figur 2: Verläufe der Phasenspannungen der drei Phasen des bürstenlosen Motors der Figur 1;
- Figur 3: Verlauf einer Phasenspannung über der Zeit bei einem bekannten Hochlauf mit direktem Übergang in den geregelten Betrieb;
- Figur 4: Verlauf einer Phasenspannung über der Zeit bei einem erfindungsgemäßen Hochlauf mit Messphase und anschließendem Übergang in den geregelten Betrieb;
- Figur 5: Verlauf einer Phasenspannung über der Zeit bei einem Auslaufen;
- Figur 6: Verlauf einer Phasenspannung über der Zeit bei einem erfindungsgemäßen Wiederanlaufen mit Messphase und anschließendem Übergang in den geregelten Betrieb; und

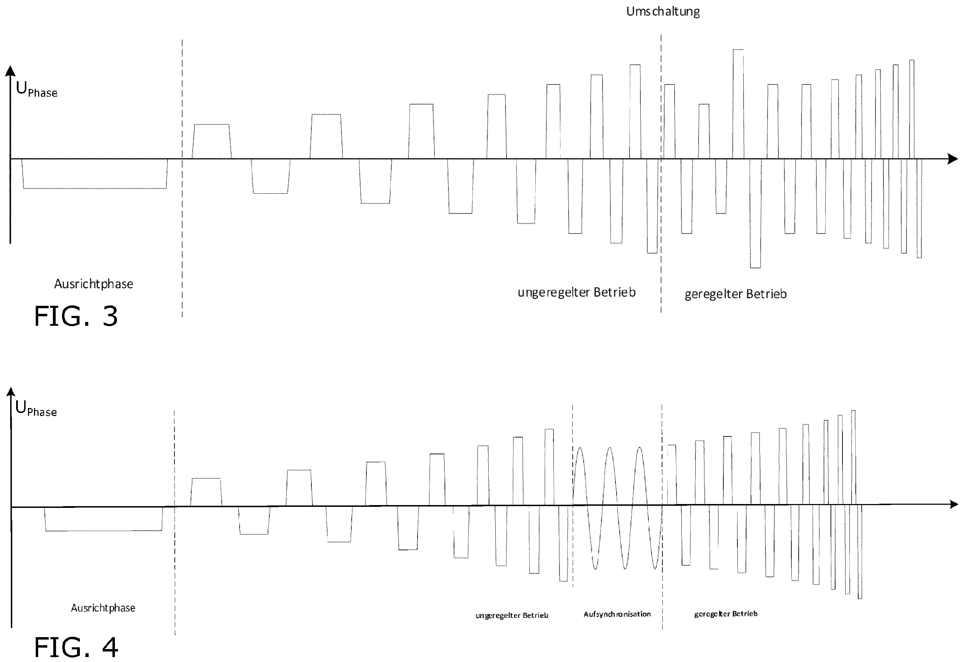

- Figur 3: ein Ablaufdiagramm eines erfindungsgemäßen Verfahrens.

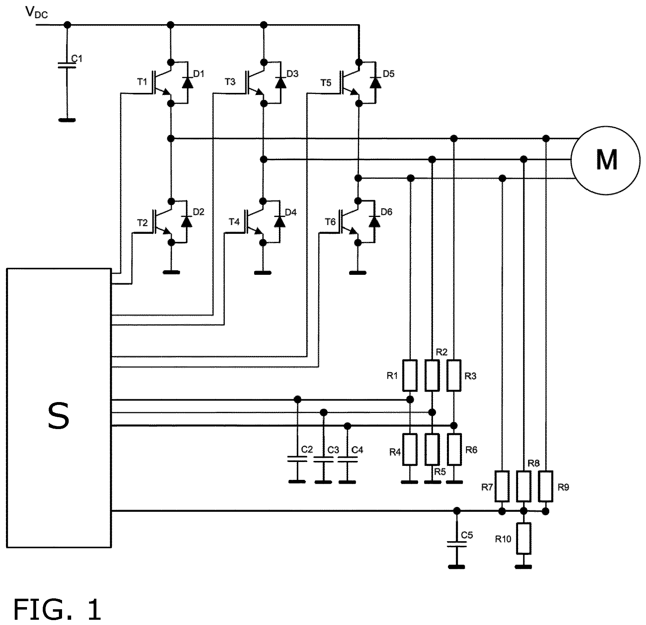

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Schaltelementen (MOSFETs oder Transistoren) T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen U_{Phase} und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet.

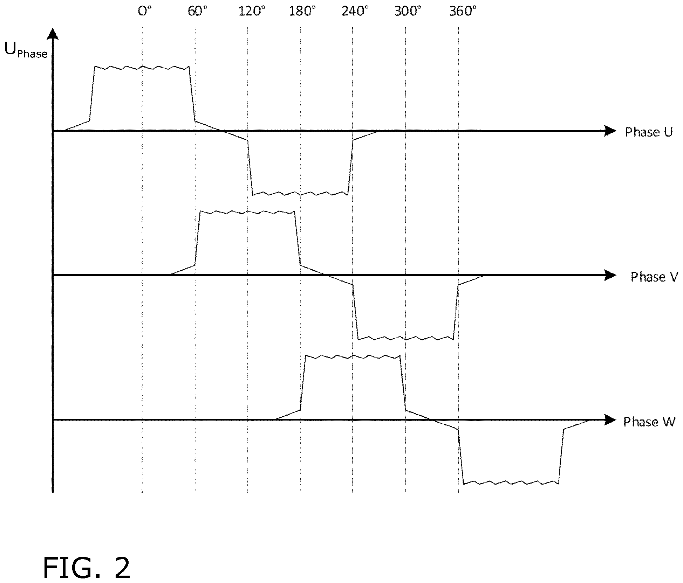

Figur 2 zeigt die Verläufe der Phasenspannungen U_{Phase} des bürstenlosen Motors M der Figur 1. Wie dem zeitlichen Verlauf der Phasenspannung U_{Phase} der Phase U zu entnehmen ist, so wird die Phase U 120° (zwei Sektoren) lang mit einer positiven Spannung aktiv beaufschlagt. Einen Sektor lang ist die Phase U strom- und spannungslos. In dieser Zeit kann die induzierte Spannung EMK der Phase U gemessen werden, welche auch als elektromotorische Kraft (EMK) bezeichnet wird.

Die Nulllinie bei der Phasenspannung U_{Phase} ist die Sternpunktspannung. Dort, wo die Phasenspannung U_{Phase} die Sternpunktspannung kreuzt, liegt ein sogenannter Nulldurchgang der jeweiligen Phasenspannung U_{Phase} vor. Dieser Zeitpunkt des Nulldurchgangs der Phasenspannung U_{Phase} ist der Moment, wo der Stator und der Rotor zueinander ausgerichtet sind. Auf diese Nulldurchgänge wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf.

Ein stehender Rotor eines BLDC-Motors M wird üblicherweise über einen bestimmten Rhythmus hochgefahren. Figur 3 zeigt den prinzipiellen Verlauf einer Phasenspannung U_{Phase} über der Zeit beim Hochlaufen eines BLDC-Motors M.

Zu Beginn eines jeden Hochlaufs steht der Rotor still. Das bekannte Verfahren des Hochlaufens beginnt mit einer Ausrichtphase, während welcher die Spulen des BLDC-Motors M mit einem Gleichstrom beaufschlagt werden. Dadurch richtet sich der Rotor in eine bestimmte Ausgangslage aus. Dann erfolgt der ungeregelte Hochlauf, bei welchem die Amplitude und die Frequenz der Phasenspannung U_{Phase} langsam erhöht werden, so dass der Rotor sich langsam zu drehen beginnt. Während des ungeregelten Hochlaufs werden die Amplitude und die Frequenz der Phasenspannung U_{Phase} nach einer vorgegebenen Tabelle zeitlich erhöht. Ist eine bestimmte Drehzahl erreicht, so wird in den geregelten Betrieb umgeschaltet. Jetzt werden die Frequenz und die Amplitude der Phasenspannung U_{Phase} über den Regelkreis bestimmt und nicht mehr fest hochgefahren.

Zum Umschaltzeitpunkt haben die zu messenden Signale der induzierten Spannung EMK eine bereits ausreichend hohe Amplitude, so dass die Rotorlagebestimmung über die induzierte Spannung EMK möglich ist und die Umschaltung in die Regelung erfolgen kann. Der Initialwert des Winkels wird ausgehend von dem Winkel des Statorfeldes in der HochlaufPhase definiert. Die Phase zwischen dem Hochlauf-Winkel und dem Rotorwinkel ist vom Lastmoment, von der Reibung und von den Motorparametern abhängig. Aus diesem Grund ist eine genaue Initialisierung dies Winkels zum Zeitpunkt des Umschaltens sehr schwierig bis unmöglich.

In der Regel findet daher beim Umschalten von gesteuerten Hochlauf in den geregelten Betrieb ein gewisser Einschwingvorgang statt, bis sich der geschätzte Winkel mit dem physikalischen Winkel aufsynchronisiert, siehe Figur 4. Der Einschwingvorgang äußert sich dabei in dem Springen der Strom- und Spannungsamplituden. Nach dem Einschwingen wird der BLDC-Motor M im geregelten Betrieb bis zur gewünschten Drehzahl weiter hochgefahren.

Der Umschaltzeitpunkt zwischen dem gesteuerten Hochlauf in den geregelten Betrieb ist der kritischste Moment in der Hochlaufphase. Einflüsse wie zum Beispiel eine Schwergängigkeit des Rotors oder eine Alterung des BLDC-Motors M können dazu führen, dass es zu großen Einschwingvorgängen nach dem Umschalten kommt. Im schlimmsten Fall kann es zu einem Abbruch der Hochlaufphase und somit zum Stillstand des Rotors des BLDC-Motors M kommen.

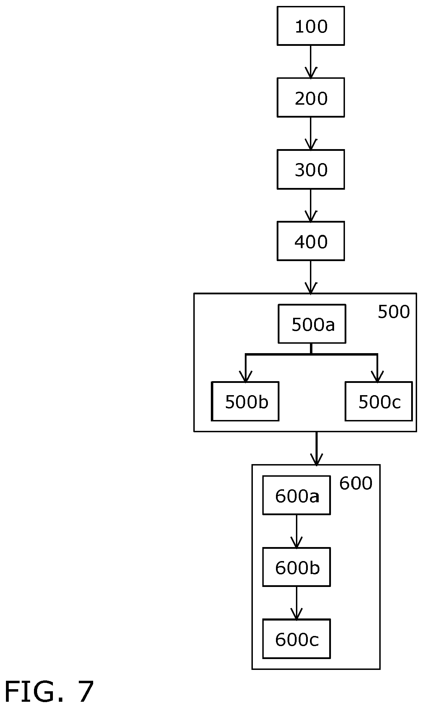

Erfindungsgemäß wird daher der Hochlauf vom Stillstand bis in den geregelten Betrieb derart durchgeführt, siehe Figur 7, dass ein Bestromen 100 von zwei oder drei Phasen U, V, W erfolgt, wobei die Spannung U_{Phase} des Bestromens 100 mittels PWM-Steuerung eingestellt wird. Hierdurch erfolgt ein Betreiben 200 des BLDC-Motors M mit rotierendem Rotor als Hochlauf. Während der Rotation des Rotors erfolgt ein Beenden 300 des Bestromens 100 der Spulen des BLDC-Motors M für wenigstens eine elektrische Periode, vorzugsweise für mehrere elektrische Perioden, sobald sich eine ausreichende Drehzahl des Rotors des BLDC-Motors M eingestellt hat, was zeitlich vorgegeben werden kann.

Während der stromlosen Rotation des Rotors des BLDC-Motors M als Messphase erfolgt nun ein Erfassen 400 der induzierten Spannung EMK und ein Bestimmen 500 der Lage und der Frequenz des Rotors basierend auf der erfassten induzierten Spannung EMK. Das Bestimmen 500 der Lage des Rotors kann erfolgen, indem ein Ermitteln 500a der Nulldurchgänge der induzierten Spannung EMK und ein Bestimmen 500b der Lage des Rotors durch die Zeitpunkte der Nulldurchgänge der induzierten Spannung EMK erfolgt. Das Bestimmen 500 der Frequenz des Rotors kann erfolgen, indem das Ermitteln 500a der Nulldurchgänge der induzierten Spannung EMK und ein Bestimmen 500c der Frequenz des Rotors durch die zeitlichen Abstände der Nulldurchgänge der induzierten Spannung EMK erfolgt.

Als Übergang aus der erfindungsgemäßen Messphase in den geregelten Betrieb erfolgt anschließend ein Betreiben 600 des BLDC-Motors M im geregelten Betrieb basierend auf der bestimmten Lage und Frequenz des Rotors. Hierzu erfolgt ein Modellieren 600a des BLDC-Motors M basierend auf der bestimmten Lage und Frequenz des Rotors, ein Synchronisieren 600b des BLDC-Motors M auf das Modell des BLDC-Motors M und bei erfolgter Synchronisation des BLDC-Motors M auf das Modell des BLDC-Motors M ein Bestromen 600c von zwei Phasen U, V, W durch den Umrichter.

Hierzu wird nach dem gesteuerten bzw. nach dem ungeregelten Hochlauf die B6-Brücke, vergleiche Figur 1, komplett abgeschaltet. Der BLDC-Motor M ist seitens des Umrichters stromlos. In diesem Zustand kann die induzierte Spannung des BLDC-Motors M erfasst werden. Hierzu kann der BLDC-Motor M nun für mindestens eine und vorzugsweise ein paar weitere Umdrehungen stromfrei bleiben.

In diesem Zeitraum der Messphase erfasst ein Rechner der Steuerungseinheit S über die Messung der Nulldurchgänge die tatsächliche Rotorlage des BLDC-Motors M. In einer Software des Rechners der Steuerungseinheit S liegt ein Motormodell vor, in dem die sechs Sektoren abgebildet sind. In dieser Messphase kann sich der Rechner der Steuerungseinheit S mit seinem Software-Motormodell des BLDC-Motors M auf die tatsächliche Rotorlage aufsynchronisieren. Ist dies geschehen, so kann die Steuerungseinheit S sicher in den geregelten Betrieb des BLDC-Motors M wechseln und den Stator des BLDC-Motors M passend zur Rotorlage bestromen. Danach wird der BLDC-Motor M im geregelten Betrieb bis zur gewünschten Drehzahl hochbeschleunigt.

Erfindungsgemäß wird somit vor dem Umschalten in den geregelten Betrieb des BLDC-Motors M eine "Messphase" einbaut, wo sich der Rechner der Steuerungseinheit S auf die Rotorlage aufsynchronisiert, um dann sicher in den geregelten Betrieb des BLDC-Motors M zu wechseln. Die Dauer dieser Phase zur Aufsynchronisation ist mindestens eine elektrische Periode. Sie kann aber auch bis auf 20 elektrischen Perioden ausgeweitet werden. Eine längere Messphase erscheint nicht vorteilhaft, weil der BLDC-Motor M sonst in der Drehzahl drastisch abnimmt. Ist die Messphase zu lang, so ist sie auch akustisch wahrnehmbar, was unvorteilhaft ist, da es das betreffende Gerät wenig hochwertig erscheinen lässt. Eine kurze Messphase dagegen ist akustisch nicht wahrnehmbar.

Das Synchronisieren des geschätzten Rotorwinkels in der Software im stromlosen Zustand ist insbesondere vorteilhaft, weil in diesem Zustand die reine induzierte Spannung EMK des BLDC-Motors M gemessen werden kann und keine Kopplungseffekte auftreten. Außerdem sind die starken Schwankungen der Drehzahl aufgrund einer falschen Ansteuerung nicht vorhanden.

Dies kann vergleichbar auf einen Wiederanlauf des BLDC-Motors M aus dem laufenden Betrieb angewendet werden, wenn der geregelte Betrieb beendet wurde, der Rotor sich noch dreht und nun ein erneuter geregelter Betrieb eingenommen werden soll. Dann kann unmittelbar die Messphase eingeleitet und wie zuvor beschrieben weiter vorgegangen werden.

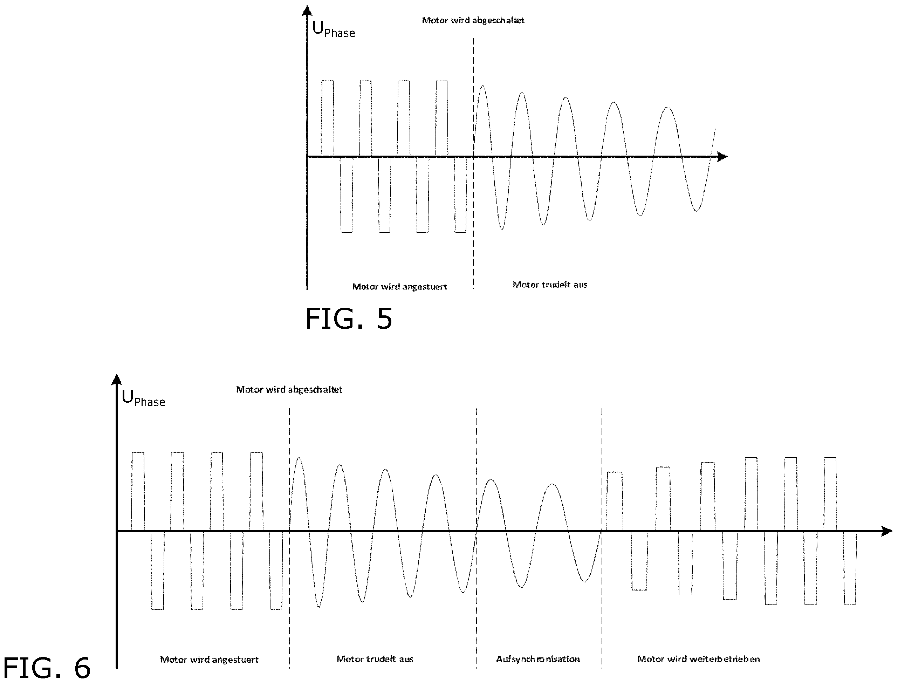

Beispielsweise bei Staubsaugern als Haushaltsgeräte wird das Gebläse nach dem Saugen ausgeschaltet. Dann sieht der Benutzer irgendwo noch einen Krümel und macht den Staubsauger gleich wieder an. Weil das Gebläse nur ein kleines Lüfterrad hat, steht der Rotor des Gebläsemotors M noch nicht still. Das kann bei leichtgängigen Motoren bis zu zehn Sekunden dauern. Jetzt soll der Gebläsemotor als BLDC-Motor M aber wieder laufen. Dies kann erfindungsgemäß wie zuvor beschrieben bzw. wie folgt erfolgen, siehe Figuren 5 und 6.

Wenn der Gebläsemotor als BLDC-Motor M abgeschaltet wird, so trudelt der BLDC-Motor M langsam aus. In dieser Zeit ist die EMK des BLDC-Motors M auf den Phasen zu sehen, siehe Figur 5. Wenn der BLDC-Motor M in diesem Moment wieder hochgefahren werden soll, so gibt es die Möglichkeit ihn abzubremsen, damit der BLDC-Motor M schnell zum Stillstand kommt, und dann gleich wieder hochzufahren. Dies führt jedoch zu einer zeitlichen Verzögerung des Wiederanlaufs.

Die andere Möglichkeit besteht darin, den noch drehenden Rotor des BLDC-Motors M direkt wieder hochzuziehen. Dies kann erfindungsgemäß mithilfe einer Aufsynchronisationsphase bzw. Messphase erfolgen, siehe Figur 6. Mithilfe der Phasenspannungsmessung wird die EMK des auslaufenden des BLDC-Motors M vermessen. Hierdurch können die Frequenz und die Rotorlage bestimmt werden. Die Aufsynchronisation benötigt mindestens eine elektrische Periode, wobei vorzugsweise mehrere elektrische Perioden verwendet werden. Nachdem sich der Rechner der Steuerungseinheit S mit seinem Software-Motormodell auf die Rotorlage aufsynchronisiert hat, kann der BLDC-Motor M wieder angesteuert werden. Der BLDC-Motor M wird nun im geregelten Betrieb wieder auf die gewünschte Drehzahl hochgefahren.

Diese erfindungsgemäße Art des Wiederanlaufs erfordert eine gewisse verbleibende Drehzahl des Rotors des BLDC-Motors M, weil sonst die Amplitude der EMK zu gering ist. Somit kann dies Verfahren des Wiederanlaufes nur ab einer gewissen Mindestdrehzahl angewendet werden. Wenn der BLDC-Motor M jedoch schon fast steht, so kann auf die Ausführung des erfindungsgemäßen Wiederanlaufs auch verzichtet und der Wiederanlauf aus dem Stillstand vorgenommen werden, da hierdurch kein bemerkenswerter Zeitverlust mehr auftreten kann.

### Bezugszeichenliste (Bestandteil der Beschreibung)

- C1-C5: Kondensatoren
- D1-D6: Dioden der B6-Brücke
- T1-T6: Transistoren der B6-Brücke
- R1-R10: ohmsche Widerstände
- V_{DC}: Gleichspannung

- U: Phase
- V: Phase
- W: Phase

- U_{Phase}: Phasenspannung; Zwischenkreisspannung
- EMK: induzierte Spannung; elektromotorische Kraft

- M: (dreiphasiger) bürstenloser Motor; BLDC-Motor
- S: Steuerungseinheit; Rechner; geregelter Frequenzumrichter

- 100: Bestromen von zwei Phasen U, V, W
- 200: Betreiben des bürstenlosen Motors M mit rotierendem Rotor
- 300: Beenden des Bestromens 100 für wenigstens eine elektrische Periode
- 400: Erfassen der induzierten Spannung EMK
- 500: Bestimmen der Lage und der Frequenz des Rotors
- 500a: Ermitteln der Nulldurchgänge der induzierten Spannung EMK
- 500b: Bestimmen der Lage des Rotors
- 500c: Bestimmen der Frequenz des Rotors
- 600: Betreiben des bürstenlosen Motors M im geregelten Betrieb
- 600a: Modellieren des bürstenlosen Motors M
- 600b: Synchronisieren eines Umrichters des bürstenlosen Motors M
- 600c: Bestromen von zwei Phasen U, V, W durch den Umrichter

## Patentansprüche

1. Verfahren zum Ansteuern eines mindestens zweiphasigen bürstenlosen Motors (M), vorzugsweise ohne Rotorlagesensor, mit wenigstens den Schritten:
• Bestromen (100) des bürstenlosen Motors (M), wobei die Spannung (U_{Phase}) des Bestromens (100) vorzugsweise mittels PWM-Steuerung eingestellt wird,
• Betreiben (200) des bürstenlosen Motors (M) mit rotierendem Rotor,
• während der Rotation des Rotors, Beenden (300) des Bestromens (100) für wenigstens eine elektrische Periode, vorzugsweise für mehrere elektrische Perioden,
• während der stromlosen Rotation des Rotors, Erfassen (400) der induzierten Spannung (EMK),
• Bestimmen (500) der Lage und der Frequenz des Rotors basierend auf der erfassten induzierten Spannung (EMK), und
• Betreiben (600) des bürstenlosen Motors (M) im geregelten Betrieb basierend auf der bestimmten Lage und Frequenz des Rotors.

2. Verfahren nach Anspruch 1, **dadurch gekennzeichnet, dass** das Betreiben (600) des bürstenlosen Motors (M) im geregelten Betrieb basierend auf der bestimmten Lage und Frequenz des Rotors durch die Schritte erfolgt:
• Modellieren (600a) des bürstenlosen Motors (M) basierend auf der bestimmten Lage und Frequenz des Rotors,
• Synchronisieren (600b) des bürstenlosen Motors (M) auf das Modell des bürstenlosen Motors (M), und
• bei erfolgter Synchronisation des bürstenlosen Motors (M) auf das Modell des bürstenlosen Motors (M), Bestromen (600c) des bürstenlosen Motors (M) durch den Umrichter.

3. Verfahren nach Anspruch 1 oder 2, **dadurch gekennzeichnet, dass** das Bestimmen (500) der Lage des Rotors basierend auf der erfassten induzierten Spannung (EMK) durch die Schritte erfolgt:
• Ermitteln (500a) der Nulldurchgänge der induzierten Spannung (EMK) und
• Bestimmen (500b) der Lage des Rotors durch die Zeitpunkte der Nulldurchgänge der induzierten Spannung (EMK).

4. Verfahren nach einem der vorangehenden Ansprüche, **dadurch gekennzeichnet, dass** das Bestimmen () der Frequenz des Rotors basierend auf der erfassten induzierten Spannung (EMK) durch die Schritte erfolgt:
• Ermitteln (500a) der Nulldurchgänge der induzierten Spannung (EMK) und
• Bestimmen (500c) der Frequenz des Rotors durch die zeitlichen Abstände der Nulldurchgänge der induzierten Spannung (EMK).

5. Verfahren nach einem der vorangehenden Ansprüche, **dadurch gekennzeichnet, dass** das Bestromen (100) des Motors (M) als gesteuerter Hochlauf erfolgt.

6. Verfahren nach einem der Ansprüche 1 bis 4, **dadurch gekennzeichnet, dass** das Bestromen (100) des Motors (M) als geregelter Betrieb erfolgt.

7. Ansteuerungsvorrichtung zum Ansteuern eines mindestens zweiphasigen bürstenlosen Motors (M), vorzugsweise ohne Rotorlagesensor, vorzugsweise gemäß einem Verfahren nach einem der vorangehenden Ansprüche,
mit einer Steuerungseinheit (S), welche ausgebildet ist, den mindestens zweiphasigen bürstenlosen Motor (M) zu bestromen, wobei die Spannung (U_{Phase}) des Bestromens (100) vorzugsweise mittels PWM-Steuerung eingestellt wird, und
mit einer Abtasteinrichtung, welche ausgebildet ist, die induzierte Spannung (EMK) zu erfassen,
wobei die Steuerungseinheit (S) ferner ausgebildet ist, den bürstenlosen Motor (M) mit rotierendem Rotor zu betreiben, während der Rotation des Rotors das Bestromen für wenigstens eine elektrische Periode, vorzugsweise für mehrere elektrische Perioden, zu beenden, die Lage und die Frequenz des Rotors basierend auf der erfassten induzierten Spannung (EMK) zu bestimmen und den bürstenlosen Motor (M) im geregelten Betrieb basierend auf der bestimmten Lage und Frequenz des Rotors zu betreiben.

8. Mindestens dreiphasiger bürstenloser Motor (M), vorzugsweise ohne Rotorlagesensor, mit einer Ansteuerungsvorrichtung nach Anspruch 7.

9. Haushaltsgerät mit mindestens einem mindestens zweiphasigen bürstenlosen Motor (M) nach Anspruch 8.

10. Haushaltsgerät nach Anspruch 9, **dadurch gekennzeichnet, dass**
das Haushaltsgerät einen, vorzugsweise wiederaufladbaren, elektrischen Energiespeicher aufweist und ausgebildet ist, mittels der gespeicherten elektrischen Energie des elektrischen Energiespeichers betrieben zu werden.
